# EUROPÄISCHE PATENTSCHRIFT

(11) **EP 3 353 427 B1**
(45) Veröffentlichungstag und Bekanntmachung des Hinweises auf die Patenterteilung: **17.07.2019**
(21) Anmeldenummer: 16766499.4
(22) Anmeldetag: 02.09.2016
(51) Int. Cl.: F15B 15/14

(54) **AUTOMATIONSKOMPONENTE ODER SPANNVORRICHTUNG MIT EINEM KOLBEN**
AUTOMATION COMPONENT OR CLAMPING DEVICE HAVING A PISTON
COMPOSANT D'AUTOMATISATION OU DISPOSITIF DE MISE EN TENSION COMPORTANT UN PISTON

(30) Priorität: 21.09.2015 DE 102015218063
(43) Veröffentlichungstag der Anmeldung: 01.08.2018
(73) Patentinhaber: Schunk GmbH & Co. KG Spann- und Greiftechnik, 74348 Lauffen an Neckar (DE)
(72) Erfinder: KIRSTEN, Benjamin, 74336 Brackenheim (DE); WUETHERICH, Samuel, 74397 Pfaffenhofen (DE); FRANZ, Michael, 74360 Ilsfeld (DE)
(74) Vertreter: DREISS Patentanwälte PartG mbB
(86) Internationale Anmeldenummer: PCT/EP2016/070780
(87) Internationale Veröffentlichungsnummer: WO 2017/050544

(56) Entgegenhaltungen:
- EP-A1- 2 331 837
- WO-A1-2015/070840
- DE-A1- 3 120 157
- DE-A1-102008 057 307
- FR-A1- 2 124 200

## Beschreibung

Die Erfindung betrifft eine Automationskomponente oder Spannvorrichtung mit einem Grundgehäuse, mit wenigstens einer in einer Backenführung des Grundgehäuses verschieblich geführten Backe, mit einem im Grundgehäuse verschieblich geführten Kolben, wobei der Kolben eine Kolbenfläche aufweist, und mit einer am Kolben angeordneten sich quer zur Kolbenfläche erstreckenden Kolbenstange, wobei der Kolben mit der Backe bewegungsgekoppelt ist.

Derartige Automationskomponente oder Spannvorrichtungen sind in vielfältiger Weise aus dem Stand der Technik vorbekannt. Als Automationskomponenten kommen insbesondere Greifvorrichtungen, Linearmodule oder -achsen, Förder- oder Hubvorrichtungen oder dergleichen in Betracht.

Um die Kolbenkraft zu maximieren (Kolbenkraft = Kolbenfläche x Druck) besteht ein Bedürfnis nach einer möglichst großen Kolbenfläche.

Beispielsweise ist aus der EP 1 263 554 B1 eine Automationskomponente in Form eines Parallelgreifers mit einem Grundgehäuse und zwei verstellbaren Backen, welche in dem Grundgehäuse in einer Backenführung verschieblich gelagert sind, vorbekannt. Die Backen sind dabei mittels eines Keilhakengetriebes verstellbar, wobei das Keilhakengetriebe über einen ovalen, im Grundgehäuse geführten Kolben verstellbar ist.

Durch das Vorsehen eines ovalen Kolbens kann dabei eine erhöhte Kolbenfläche bereitgestellt werden, wobei der Flächenschwerpunkt der Kolbenfläche mit der Mittellängsachse zusammenfällt. Dadurch kann ein Kippmoment ausgeschlossen werden. Einer derartigen Ausbildung des Kolbens sind jedoch konstruktionsbedingt enge Grenzen gesetzt.

Aus der DE 10 2010 021247A1 ist eine weitere Automationskomponente mit einem Kolben bekannt.

Aus der DE 3120157 A1 ist ein Arbeitszylinder mit einem Kolben und Kolbenstange bekannt, wobei der Kolben Merkmale des Oberbegriffs des Anspruchs 1 aufweist.

Aus der WO2015/070840A1 ist eine Automationskomponente in Form einer Greifvorrichtung mit Merkmalen des Oberbegriffs des Anspruchs 1 bekannt. Die dort offenbarte Greifvorrichtung weist einen Kolben mit einer Kolbenstange und mit Sacklöchern auf.

Es ist Aufgabe der Erfindung, den genannten Nachteilen des Standes der Technik Abhilfe zu schaffen.

Diese Aufgabe wird mit einer Automationskomponente oder Spannvorrichtung mit den Merkmalen des Anspruchs 1 gelöst. Es ist folglich vorgesehen, dass der Flächenschwerpunkt der Kolbenfläche von der Mittellängsachse der Kolbenstange beabstandet ist. Dabei liegt der Flächenschwerpunkt in Draufsicht auf die Kolbenfläche innerhalb des Umfangs der Kolbenstange. Zwar tritt aufgrund des Abstands des Flächenschwerpunkts von der Mittellängsachse bei einer Betätigung ein Kippmoment auf; dieses wird allerdings - da es innerhalb des Umfangs der Kolbenstange angreift - direkt in die Kolbenstange eingeleitet und kann damit in Kauf genommen werden kann.

Das Grundgehäuse kann insbesondere einen Zylinder mit einer durch das Grundgehäuse gebildeten Zylinderwandung umfassen. Dadurch wird eine Kolben-Zylinder-Einheit bereitgestellt, welche als hydraulische oder pneumatische Stelleinrichtung für die Backe ausgebildet ist. Eine Bewegungskopplung des Kolbens bzw. der Kolbenstange mit der Backe kann beispielsweise über einen an der Kolbenstange angeordneten Keilhaken erfolgen, so dass die Backe über ein Keilhakengetriebe verstellbar ist.

Denkbar ist, dass die Kolbenfläche asymmetrisch ausgebildet ist, also dass kein Symmetrieelement vorhanden ist. Hierdurch kann die zur Verfügung stehende Fläche des Grundgehäuses bestmöglich ausgenutzt werden.
Andererseits ist auch denkbar, dass die Kolbenfläche eine Symmetrieachse aufweist, wobei der Flächenschwerpunkt auf der Symmetrieachse liegt. Liegt Achsensymmetrie vor, so liegt bekanntlich der Schwerpunkt stets auf der Symmetrieachse. Als besonders vorteilhaft hat es sich dabei herausgestellt, wenn die Symmetrieachse quer zur Verschieberichtung der Backe verläuft. Ein Kippmoment des Kolbens quer zur Verschieberichtung wirkt sich dadurch besonders geringfügig negativ aus.

Dabei ist insbesondere denkbar, dass die Kolbenfläche ausgehend von einer ellipsenartigen Form in Richtung einer kleinen Halbachse erweitert ist. Die kleine Halbachse kann sich insbesondere quer zur Verschieberichtung der Backe erstrecken. Die kleine Halbachse entspricht dabei dem kürzesten halben Durchmesser des Kolbens, während die große Halbachse dem größten halben Durchmesser des Kolbens entspricht.

Denkbar ist, dass die Kolbenstange kreiszylindrisch ausgebildet ist, und dass der Abstand des Flächenschwerpunkts zur Mittellängsachse 2% bis 10%, insbesondere 6% bis 9% des Durchmessers der Kolbenstange beträgt. Die Kolbenstange kann insbesondere einen Durchmesser von 14 mm bis 18 mm, insbesondere 16 mm aufweisen, wobei der Flächenschwerpunkt 0,5 mm bis 1,5 mm, insbesondere 1 mm von der Mittellängsachse beabstandet sein kann.

Der Kolben kann in Draufsicht eine vieleckige Außenkontur aufweisen; auch hierdurch wird eine bestmögliche Ausnutzung der zur Verfügung stehenden Grundgehäusefläche ermöglicht. Um eine bessere Abdichtung zu erreichen, können die Ecken dabei verrundet ausgebildet sein.

Die Außenkontur kann dabei eine Kurve beschreiben deren Krümmung an jeder Stelle gleichgerichtet ist, also ein gleiches Vorzeichen aufweist und/oder deren Krümmung an keiner Stelle zu Null wird, wobei eine Krümmung Null einer Geraden entspricht. Ferner können die Einzelsegmente, welche die Außenkontur beschreiben, tangentenstetige und/oder krümmungsstetige und/oder krümmungsänderungsstetige Übergänge besitzen.

Der Flächenschwerpunkt kann parallel und/oder quer zur Verschieberichtung der Backe von der Mittellängsachse beabstandet sein. Als besonders vorteilhaft hat es sich allerdings herausgestellt, wenn der Schwerpunkt lediglich quer zur Verschieberichtung der Backe von der Mittellängsachse beabstandet ist. Ein Kippmoment des Kolbens hat dabei einen besonders geringfügigen Einfluss.

Insbesondere kann der Flächenschwerpunkt parallel und/oder quer zu einer Gehäusewandung des Grundgehäuses von der Mittellängsachse beabstandet sein.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden.

Es zeigen:
- Figur 1: eine perspektivische Ansicht einer Automationskomponente in Form eines Parallelgreifers ohne Bodenplatte, Kolben sowie Backen;
- Figur 2: eine Draufsicht auf den Parallelgreifer gemäß Figur 1;
- Figur 3: einen Querschnitt durch den Parallelgreifer gemäß Figur 2 entlang der Linie III-III mit Bodenplatte, Kolben sowie Backen;
- Figur 4: einen Kolben mit daran angeordneter Kolbenstange für den in den Figuren 1 bis 3 gezeigten Parallelgreifer;
- Figur 5: eine Draufsicht auf die Darstellung gemäß Figur 4; und
- Figur 6: eine Unteransicht auf die Darstellung gemäß Figur 4.

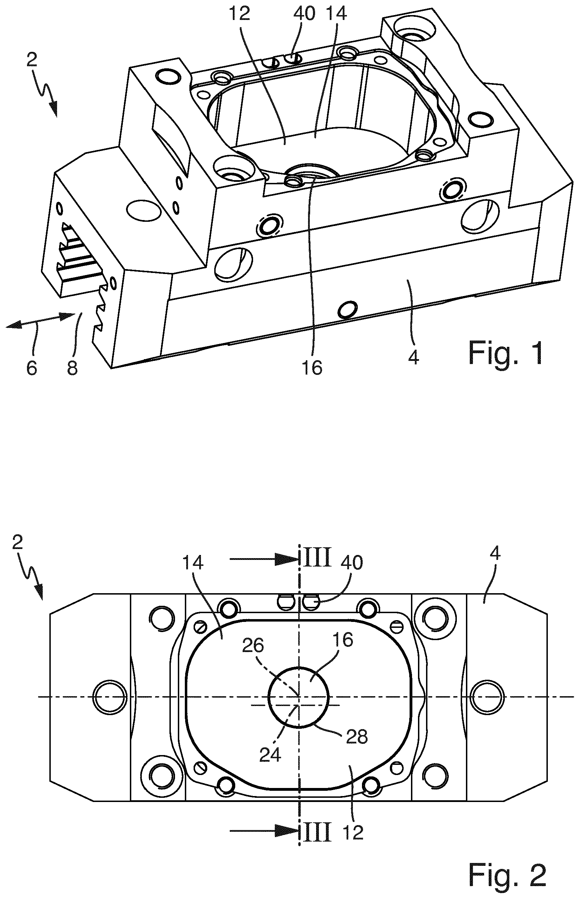

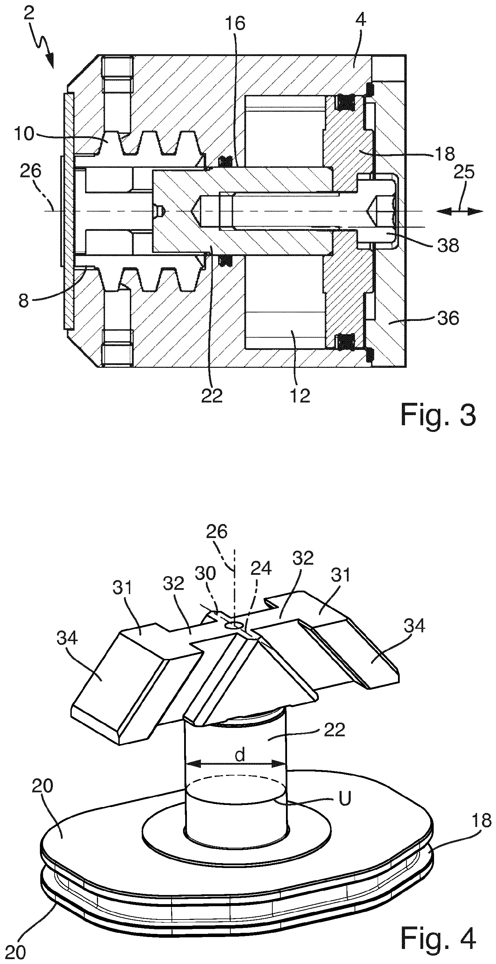

Die Figur 1 zeigt eine als Parallelgreifer ausgebildete Greifvorrichtung 2. Diese umfasst ein Grundgehäuse 4 mit in einer in Längsrichtung 6 verlaufenden Backenführung 8 für zwei Greiferbacken 10 (vgl. Figur 3), welche in Längsrichtung 6 in die Backenführung 8 einführbar und darin verschieblich lagerbar sind. Die Längsrichtung 6 entspricht dabei auch der Verschieberichtung 6. Auf einer Oberseite der Greiferbacken 10 sind Montageöffnungen zum lösbaren Anbringen von Greiferfingerelementen im weitesten Sinne vorgesehen, die hier nicht weiter beschrieben werden sollen.

Am Grundgehäuse 4 sind Sensornuten 40 vorgesehen, an welchen Positionssensoren angeordnet werden können.

Wie den Figuren 1 bis 3 ferner zu entnehmen ist, ist im Grundgehäuse 4 ein Zylinderraum 12 vorgesehen, wobei der Zylinderboden 14 des Zylinderraumes 12 eine Öffnung 16 aufweist in die Backenführung 8 mündet. Aus Figur 3 geht hervor, dass ein Kolben 18 im Zylinderraum 12 verschieblich geführt ist.

Wie aus den Figuren 3 bis 6 hervorgeht, weist der Kolben 18 eine Kolbenfläche 20 auf. Diese entspricht der vom Kolbenumfang eingenommenen Fläche bzw. der von der Zylinderwandung eingenommenen Fläche quer zur Verschieberichtung 25 des Kolbens 18. Am Kolben 18 ist eine Kolbenstange 22 angeordnet, welche sich quer zur Kolbenfläche 20 erstreckt. Die Kolbenstange 22 durchgreift die Öffnung 16 des Bodens 14 des Zylinderraums 12. Der Zylinderraum 12 ist über einen Zylinderdeckel 36 abgeschlossen. Die Kolbenstange 22 ist mittels einer Schraube 38 an den Kolben 18 angeschraubt.

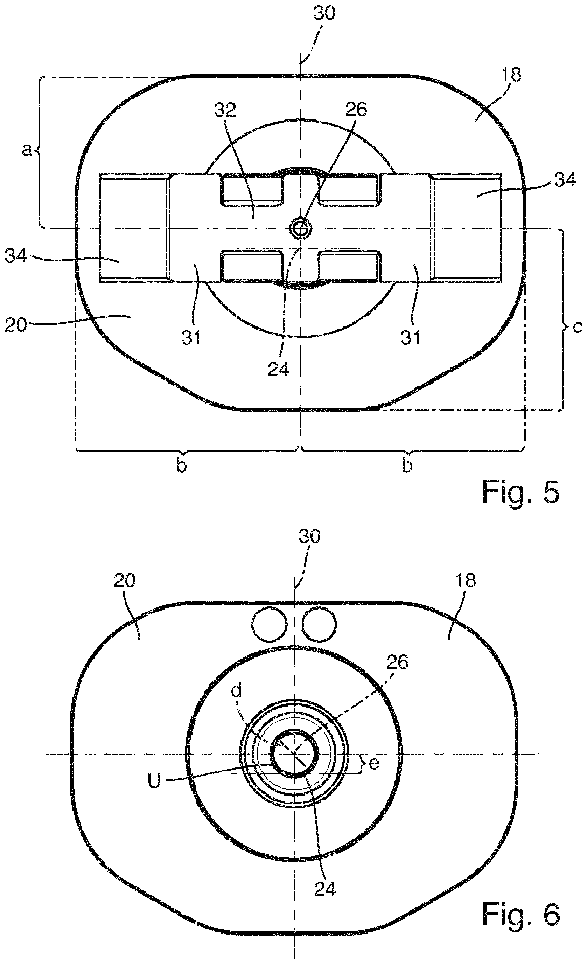

Die Kolbenfläche 20 weist dabei einen Flächenschwerpunkt 24 von der Mittellängsachse 26 der Kolbenstange 22 beabstandet ist. Wie den Figuren 2 und 6 zu entnehmen ist, liegt der Flächenschwerpunkt 24 der Kolbenfläche 20 innerhalb des Umfangs u der Kolbenstange 22. Die Kolbenstange 22 ist kreiszylindrisch mit einem Durchmesser d ausgebildet, wobei der Flächenschwerpunkt 24 um den Abstand e von 2 - 10 % des Durchmessers der Kolbenstange von der Mittellängsachse 26 beabstandet ist.

Wie insbesondere aus den Figuren 5 und 6 hervorgeht, weist der Kolben 18 bzw. die Kolbenfläche 20 eine Symmetrieachse 30 auf. Folglich liegt der Flächenschwerpunkt 24 auf der Symmetrieachse 30. Die Symmetrieachse 30 verläuft quer zur Verschieberichtung 6 der Backen 10. Also ist der Flächenschwerpunkt 24 quer zur Verschieberichtung 6 von der Mittellängsachse 26 beabstandet.

Wie der Figur 4 zu entnehmen ist, sind an der Kolbenstange 22 zwei zur Symmetrieachse 30 spiegelsymmetrische Keilhaken 31 mit jeweils einem Stegabschnitt 32 und einem Hakenabschnitt 34 angeordnet. Die Keilhaken 31 wirken mit korrespondierenden Führungsnuten der Greiferbacken 10 zusammen, so dass über dieses Keilhakengetriebe eine Bewegungskopplung der Greiferbacken 10 mit dem Kolben 18 bereitgestellt wird. Die Kolben-Zylinder-Einheit umfassend den Kolben 18 sowie den Zylinderraum 12 bildet damit eine hydraulische oder pneumatische Stelleinrichtung für die Greiferbacken 10.

Der wesentliche Erfindungsgedanke wird durch eine Zusammenschau der Figuren 1 und 2 sowie 5 deutlich. Aus dem Stand der Technik sind ovale Kolben vorbekannt, bei denen jeweils zwei kurze Halbachsen a und zwei lange Halbachsen b vorhanden sind. Vorliegend ist die Kolbenfläche 20, ausgehend von einer ellipsenartigen Form in Richtung einer kleinen Halbachse c erweitert. In Verschieberichtung 6 sind folglich zwei gleich lange Halbachsen b vorhanden, während quer zur Verschieberichtung 6 eine kürzere Halbachse a und eine längere Halbachse c vorhanden sind. Aufgrund des Vorliegens von Sensornuten 40 ist es konstruktionsbedingt nicht möglich, die Kolbenfläche in Richtung der kurzen Halbachse a zu erweitern. In Richtung der Halbachse c ist jedoch eine Vergrößerung möglich. Daraus resultiert eine Verschiebung des Flächenschwerpunkts 24 weg von der Mittellängsachse 26. Dieser geringfügige Nachteil wird allerdings durch die Vorteile betreffend die Kolbenkraft (Kolbenkraft = Kolbenfläche x Druck) durch die Vergrößerung der Kolbenfläche 20 überkompensiert.

## Patentansprüche

1. Automationskomponente oder Spannvorrichtung (2) mit einem Grundgehäuse (4), mit wenigstens einer in einer Backenführung (8) des Grundgehäuses (4) verschieblich geführten Backe (10), mit einem im Grundgehäuse (4) verschieblich geführten Kolben (18), wobei der Kolben (18) eine kolbenstangenseitige Kolbenfläche (20) aufweist, und mit einer am Kolben (18) angeordneten sich quer zur kolbenstangenseitige Kolbenfläche (20) erstreckenden Kolbenstange (22), wobei der Kolben (18) mit der Backe (10) bewegungsgekoppelt ist, wobei der Flächenschwerpunkt (24) der kolbenstangenseitige Kolbenfläche (20) von der Mittellängsachse (26) der Kolbenstange (22) beabstandet ist, **dadurch gekennzeichnet, dass** der Flächenschwerpunkt (24) in Draufsicht auf die kolbenstangenseitige Kolbenfläche (20) innerhalb des Umfangs (28) der Kolbenstange (22) liegt.

2. Automationskomponente oder Spannvorrichtung (2) nach Anspruch 1, **dadurch gekennzeichnet**, das Grundgehäuse (4) einen Zylinder (12) mit einer durch das Grundgehäuse gebildeten Zylinderwandung umfasst, in der der Kolben (18) verschieblich geführt angeordnet ist.

3. Automationskomponente oder Spannvorrichtung (2) nach Anspruch 1 oder 2, **dadurch gekennzeichnet, dass** die Kolbenfläche (20) asymmetrisch ausgebildet ist.

4. Automationskomponente oder Spannvorrichtung (2) nach Anspruch 1 oder 2, **dadurch gekennzeichnet, dass** die Kolbenfläche (20) eine Symmetrieachse (30) aufweist, wobei der Flächenschwerpunkt (24) auf der Symmetrieachse (30) liegt.

5. Automationskomponente oder Spannvorrichtung (2) nach Anspruch 4, **dadurch gekennzeichnet, dass** die Symmetrieachse (30) quer zur Verschieberichtung (6) der Backe (10) verläuft.

6. Automationskomponente oder Spannvorrichtung (2) nach einem der vorhergehenden Ansprüche, **dadurch gekennzeichnet, dass** die Kolbenfläche (20) ausgehend von einer ovalen Form in Richtung einer kleinen Halbachse (c) erweitert ist.

7. Automationskomponente oder Spannvorrichtung (2) nach einem der vorhergehenden Ansprüche, **dadurch gekennzeichnet, dass** die Kolbenstange (22) kreiszylindrisch ausgebildet ist, und dass der Abstand des Flächenschwerpunkts (24) zur Mittellängsachse (26) 2% bis 10%, insbesondere 6% bis 9%, des Durchmessers der Kolbenstange (22) beträgt.

8. Automationskomponente oder Spannvorrichtung (2) nach einem der vorhergehenden Ansprüche, **dadurch gekennzeichnet, dass** der Kolben (18) eine vieleckige Außenkontur aufweist.

9. Automationskomponente oder Spannvorrichtung (2) nach einem der vorhergehenden Ansprüche, **dadurch gekennzeichnet, dass** der Kolben (18) eine Außenkontur aufweist, die eine Kurve beschreibt,
- deren Krümmung an jeder Stelle gleichgerichtet ist und/oder
- deren Krümmung an keiner Stelle zu Null wird, und/oder
- deren Einzelsegmente tangentenstetige und/oder krümmungsstetige und/oder krümmungsänderungsstetige Übergänge besitzen.

10. Automationskomponente oder Spannvorrichtung (2) nach Anspruch 8 oder 9, **dadurch gekennzeichnet, dass** die Ecken verrundet ausgebildet sind.

11. Automationskomponente oder Spannvorrichtung (2) nach einem der vorhergehenden Ansprüche, **dadurch gekennzeichnet, dass** der Flächenschwerpunkt (24) parallel und/oder quer zur Verschieberichtung (6) der Backe (10) von der Mittellängsachse (26) beabstandet ist.

12. Automationskomponente oder Spannvorrichtung (2) nach einem der vorhergehenden Ansprüche, **dadurch gekennzeichnet, dass** der Flächenschwerpunkt (24) parallel und/oder quer zu einer Gehäusewandung des Grundgehäuses (4) von der Mittellängsachse (26) beabstandet ist.

## Claims

1. An automation component or clamping device (2) comprising a basic housing (4), at least one jaw (10) movably guided in a jaw guide (8) of said basic housing (4), a piston (18) movably guided in said basic housing (4), said piston (18) having a piston rod sided piston surface (20), and a piston rod (22) disposed on said piston (18) which extends transversely with respect to said piston rod sided piston surface (20), said piston (18) being coupled to said jaw (10) in terms of movement, wherein the centroid (24) of said piston rod sided piston surface (20) being spaced apart from said central longitudinal axis (26) of said piston rod (22), **characterized in that** said centroid (24) is located within the periphery (28) of said piston rod (22) in a plan view of said piston rod sided piston surface (20).

2. The automation component or clamping device (2) according to claim 1, **characterized in that** said basic housing (4) comprises a cylinder (12) having a cylinder wall formed by said basic housing in which said piston (18) is movably guided.

3. The automation component or clamping device (2) according to claim 1 or 2, **characterized in that** said piston surface (20) is formed asymmetrically.

4. The automation component or clamping device (2) according to claim 1 or 2, **characterized in that** said piston surface (20) has an symmetry axis (30), said centroid (24) being located on said symmetry axis (30).

5. The automation component or clamping device (2) according to claim 4, **characterized in that** said symmetry axis (30) extends transversely with respect to the direction of movement (6) of said jaw (10).

6. The automation component or clamping device (2) according to one of the preceding claims, **characterized in that** said piston surface (20) is widened from an oval shape towards a semi-minor axis (c).

7. The automation component or clamping device (2) according to one of the preceding claims, **characterized in that** said piston rod (22) is circular-cylindrical, and **in that** the distance of said centroid (24) to said central longitudinal axis (26) is 2 % to 10 %, in particular 6 % to 9 % of the diameter of said piston rod (22).

8. The automation component or clamping device (2) according to one of the preceding claims, **characterized in that** said piston (18) has a polygonal outer contour.

9. The automation component or clamping device (2) according to one of the preceding claims, **characterized in that** said piston (18) has an outer contour that describes a curve
- the curvature of which is equally signed at every point, and/or
- the curvature of which is not zero at any point, and/or
- the individual segments of which have transitions continuous in tangent and/or continuous in curvature and/or continuous in change of curvature.

10. The automation component or clamping device (2) according to claim 8 or 9, **characterized in that** the corners are rounded.

11. The automation component or clamping device (2) according to one of the preceding claims, **characterized in that** said centroid (24) is spaced apart from said central longitudinal axis (26) in parallel with and/or transversely with respect to the direction of movement (6) of said jaw (10).

12. The automation component or clamping device (2) according to one of the preceding claims, **characterized in that** said centroid (24) is spaced apart from said central longitudinal axis (26) in a direction in parallel with or transversely with respect to a housing wall of said basic housing (4).

## Revendications

1. Composant d'automatisation ou dispositif de serrage (2) comprenant un boîtier de base (4), au moins une mâchoire (10) susceptible de coulisser dans un guidage de mâchoire (8) du boîtier de base (4), un piston (18) susceptible de coulisser dans le boîtier de base (4), le boîtier (18) comprenant une surface de piston (20) située côté tige de piston, ainsi qu'une tige de piston (22) montée sur le piston (18) et s'étendant transversalement à la surface du piston (20) située côté tige de piston, le piston (18) se déplaçant solidairement à la mâchoire (10), le centre de gravité (24) de la surface du piston (20) située côté tige de piston étant positionné à distance de l'axe longitudinal médian (26) da la tige de piston (22),
**caractérisé en ce que**
le centre de gravité (24) de la surface est situé en vue de dessus sur la surface du piston (20) située côté tige de piston à la partie interne de la périphérie (28) de la tige de piston (22).

2. Composant d'automatisation ou dispositif de serrage (2) conforme à la revendication 1,
**caractérisé en ce que**
le boîtier de base (4) comporte un cylindre (12) ayant une paroi cylindrique formée au travers de ce boîtier de base, dans laquelle le piston (18) est susceptible de coulisser.

3. Composant d'automatisation ou dispositif de serrage (2) conforme à la revendication 1 ou 2,
**caractérisé en ce que**
la surface (20) du piston est asymétrique.

4. Composant d'automatisation ou dispositif de serrage (2) conforme à la revendication 1 ou 2,
**caractérisé en ce que**
la surface (20) du piston comporte un axe de symétrie (30), le centre de gravité (24) de la surface étant situé sur l'axe de symétrie (30).

5. Composant d'automatisation ou dispositif de serrage (2) conforme à la revendication 4,
**caractérisé en ce que**
l'axe de symétrie (30) s'étend transversalement à la direction de coulissement (6) de la mâchoire (10).

6. Composant d'automatisation ou dispositif de serrage (2) conforme à l'une des revendications précédentes,
**caractérisé en ce qu'**
à partir d'une forme ovale la surface (20) du piston est élargie dans la direction d'un petit demi axe (c)

7. Composant d'automatisation ou dispositif de serrage (2) conforme à l'une des revendications précédentes,
**caractérisé en ce que**
la tige du piston (22) est en forme de cylindre circulaire et la distance du centre de gravité (24) de la surface à l'axe longitudinal médian (26) est égale à 2% à 10%, en particulier à 6% à 9% du diamètre de la tige de piston (22).

8. Composant d'automatisation ou dispositif de serrage (2) conforme à l'une des revendications précédentes,
**caractérisé en ce que**
le piston (18) a un contour externe polygonal.

9. Composant d'automatisation ou dispositif de serrage (2) conforme à l'une des revendications précédentes,
**caractérisé en ce que**
le piston (18) a un contour externe qui décrit une courbe :
- dont la courbure a la même direction en chaque point, et/ou
- dont la courbure ne devient nulle en aucun point, et/ou
- dont les segments individuels ont des raccordements à continuité de tangente et/ou à continuité de courbure et/ou à continuité de variation de courbure.

10. Composant d'automatisation ou dispositif de serrage (2) conforme à la revendication 8 ou 9,
**caractérisé en ce que**
les coins du polygone sont arrondis.

11. Composant d'automatisation ou dispositif de serrage (2) conforme à l'une des revendications précédentes,
**caractérisé en ce que**
le centre de gravité (24) de la surface est situé à distance de l'axe longitudinal médian (26) parallèlement et/ou transversalement à la direction de coulissement (6) de la mâchoire (10).

12. Composant d'automatisation ou dispositif de serrage (2) conforme à l'une des revendications précédentes,
**caractérisé en ce que**
le centre de gravité (24) de la surface est situé à distance de l'axe longitudinal médian (26) parallèlement et/ou transversalement à la paroi du boîtier de base (4).
